# DEMANDE DE BREVET EUROPEEN

(11) **EP 0 806 604 A1**
(43) Date de publication de la demande: **12.11.1997**
(21) Numéro de dépôt: 97401007.6
(22) Date de dépôt: 05.05.1997
(51) Int. Cl.: F21Q 1/00, B60Q 1/26

(54) **Feu de signalisation pour véhicule automobile, comportant des moyens de limitation de sa plage eclairante**

(30) Priorité: 07.05.1996 FR 9605696
(71) Demandeur: VALEO VISION, 93000 Bobigny (FR)
(72) Inventeur: Coutin, Alain, 89100 Saint-Clement (FR); Fleurinck, Dominique, 8910 Sens (FR); Durand, Dominique, 03400 Yzeure (FR); Krizmanic, Jacky, 89100 Sens (FR); Gasquet, Jean-Claude, 89100 Saint-Clement (FR)
(74) Mandataire: Le Forestier, Eric

(57) **Abrégé**

Un feu de signalisation pour véhicule automobile comprend une source lumineuse (100) et un voyant (300). Le voyant comporte une zone active (Z1) et une zone inactive (Z2). Le feu comporte une cloison (210) arrivant jusqu'à proximité de la face interne duoyant au niveau de la transition entre les zones active et inactive, et le voyant comporte dans ladite zone active une optique à prismes (310) apte à réduire la divergence du rayonnement incident. Cette optique à prismes comporte une série de dépouilles exposées à une proportion substantielle d'un rayonnement issu de la source et dirigé en oblique, dépouilles par lesquelles ledit rayonnement peut pénétrer dans le voyant et se propager jusque dans ladite zone inactive.

Selon l'invention, le voyant comporte, au niveau de ladite zone inactive, des prismes (320) possédant des surfaces essentiellement inverses de celles des prismes voisins de la zone active.

## Description

La présente invention concerne des feux de signalisation pour véhicules automobiles, et en particulier les feux de signalisation comportant notamment au niveau de leur voyant des moyens de traitement optique à prismes.

Dans la conception actuelle des feux de signalisation automobile, l'aspect extérieur du feu allumé et éteint prend une importance croissante.

On recherche notamment à limiter précisément la plage éclairante du feu à un contour net défini notamment par le styliste.

On connaît déjà dans l'état de la technique certains moyens pour délimiter une plage éclairante, ou zone active, du feu.

Une première solution consiste à limiter le flux lumineux issu de la source lumineuse par une cloison issue du socle du feu et arrivant jusqu'à grande proximité du voyant.

Mais dans un feu de signalisation dans lequel c'est le flux direct émis par la lampe qui est utilisé par des prismes fortement inclinés pour redresser et répartir les rayons lumineux issus de la source lumineuse vers les différentes zones de la grille photométrique imposée par la norme ou les constructeurs, une quantité importante de lumière pénètre dans le voyant par les dépouilles des prismes et possède une trajectoire non contrôlée due à une réflexion totale dans l'épaisseur du voyant.

Ainsi, ces rayons lumineux parasites rentrant par les dépouilles des prismes proches de la limite de la zone active tendent à ressortir du feu au niveau de la zone inactive, c'est-à-dire en dehors de la plage éclairante souhaitée. Ce phénomène produit un flux lumineux parasite en zone inactive du feu.

Afin de limiter ou d'éviter totalement ce phénomène, plusieurs solutions existent dans l'état de la technique.

L'une des possibilités consiste à injecter dans le voyant un muret de matière opaque, de hauteur égale à l'épaisseur du voyant, afin d'arrêter- le flux lumineux sur le contour de la zone active.

Une autre possibilité est de traiter la surface extérieure du voyant par grainage ou peinture, sur toute la zone inactive du voyant.

Néanmoins, ces solutions de l'état de la technique utilisent des traitements qui modifient la couleur du voyant éteint, entre les zones active et inactive, et qui impliquent toutes un surcoût.

Ainsi ces solutions connues présentent un désavantage pour l'esthétique du feu en situation éteinte.

Enfin une autre solution connue est de limiter la géométrie du voyant strictement à la zone lumineuse souhaitée.

Mais cette solution classique est limitative pour l'aspect général du feu et ne permet pas d'adapter l'esthétique des feux de signalisation aux différentes demandes en matière de style.

Une autre solution encore est proposée dans le document EP-A-0 510 532.

Selon ce document, une glace commune comportant une optique à billes recouvre un projecteur et un feu adjacents. Pour éviter le passage de la lumière du projecteur vers le feu, ce document propose de séparer les deux optiques de la glace par quelques prismes situés entre ces optiques et isolés entre deux parois d'une double cloison qui arrive jusqu'à proximité du voyant.

La surface des prismes est choisie globalement perpendiculaire à la moyenne des rayons qui s'échappent de la zone active, afin que les rayons parasites soient transmis à l'arrière du voyant.

Néanmoins, cette solution connue n'est pas à même de traiter efficacement le cas où des rayons parasites pénètrent dans la glace, ou dans un voyant, avec une orientation différente, comme c'est le cas notamment pour des rayons pénétrant par des dépouilles de prismes.

Ainsi, dans le contexte d'un voyant à prismes, cette antériorité ne permettrait pas d'obtenir un contour précis de la zone active, puisqu'une partie du flux lumineux parasite réapparaîtrait hors de la zone active.

Le but de la présente invention est d'améliorer significativement la netteté de contour de la plage éclairante d'un feu de signalisation, à une zone dite active, sans modifier la couleur ou l'aspect général du feu lorsqu'il est éteint, en particulier au niveau de la limite de ladite plage éclairante.

Pour cela, l'invention propose un feu de signalisation tel que défini dans la revendication 1.

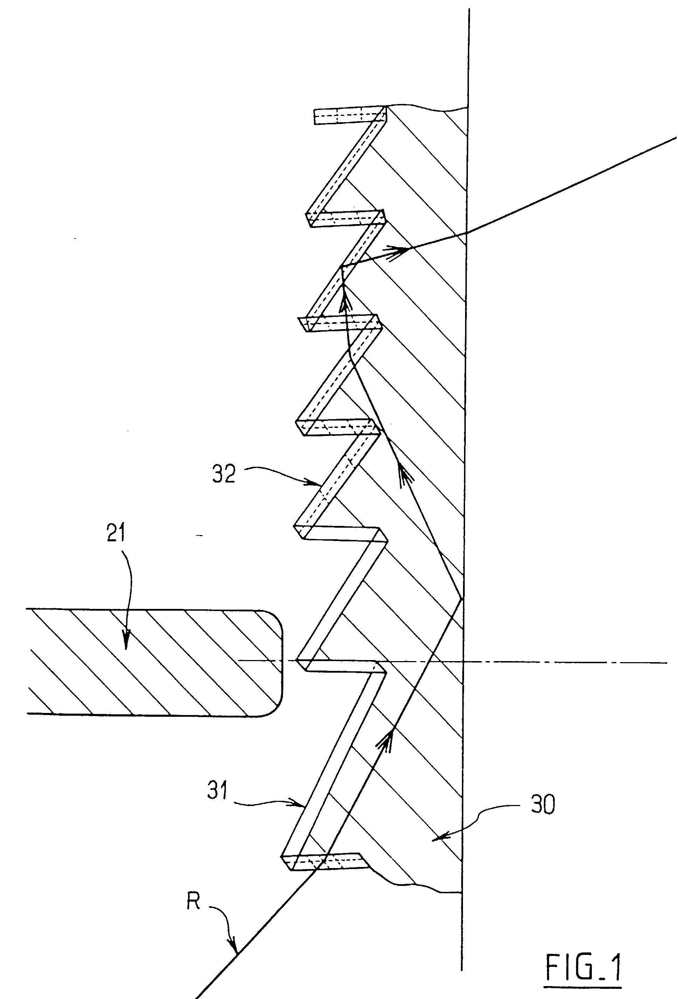

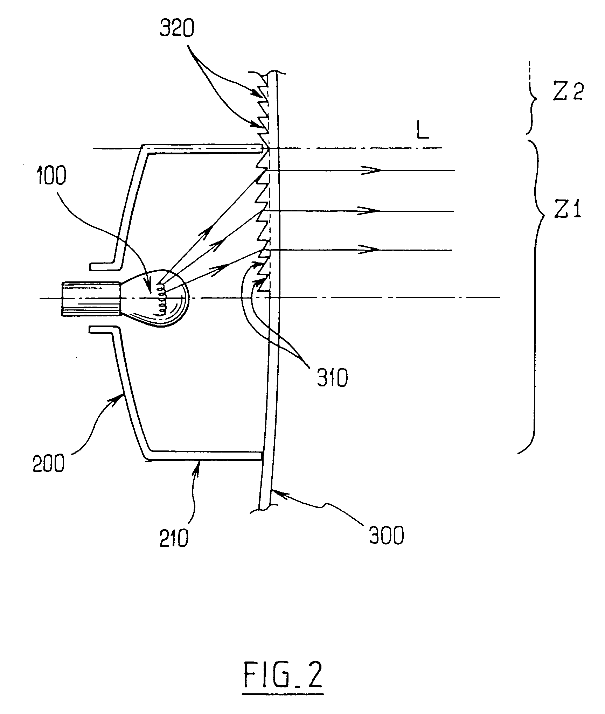

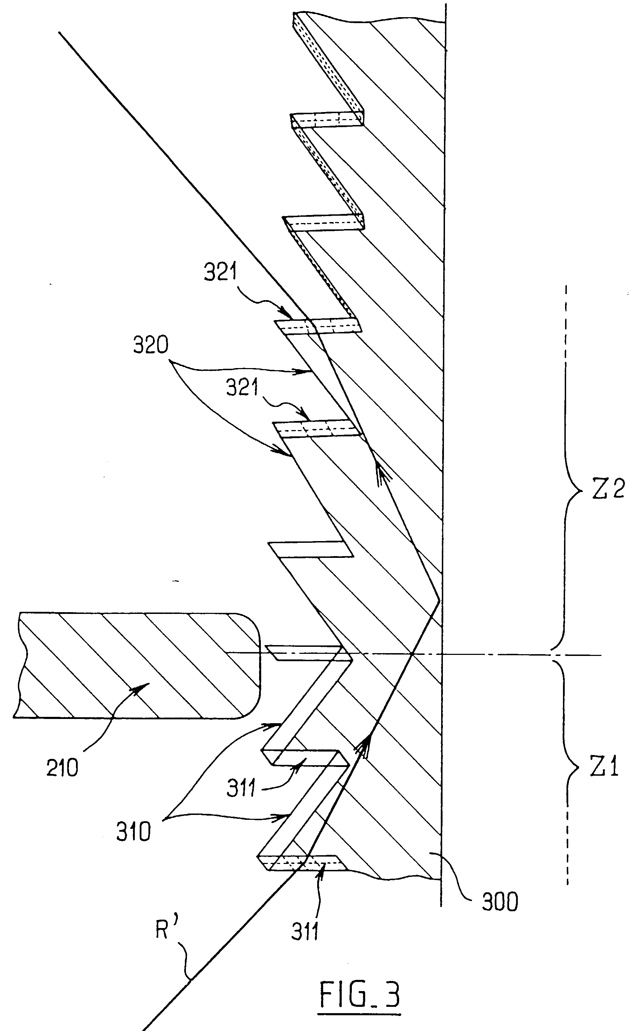

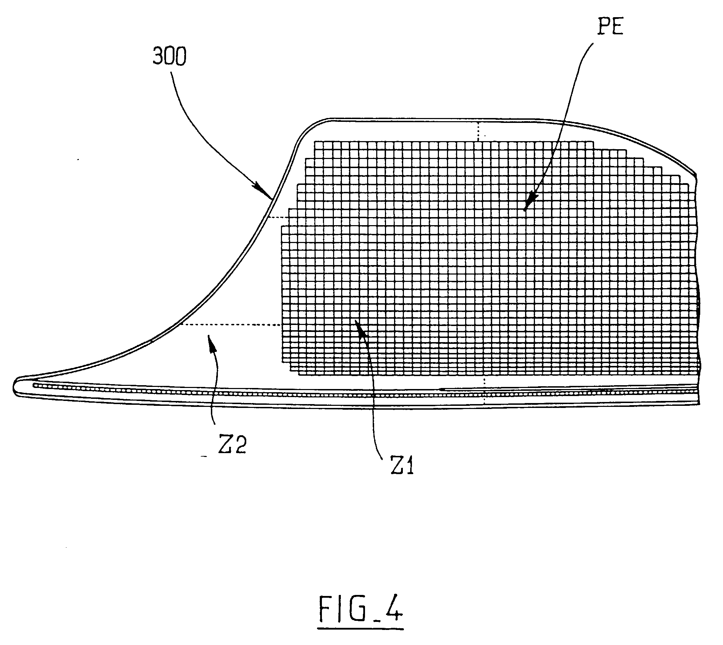

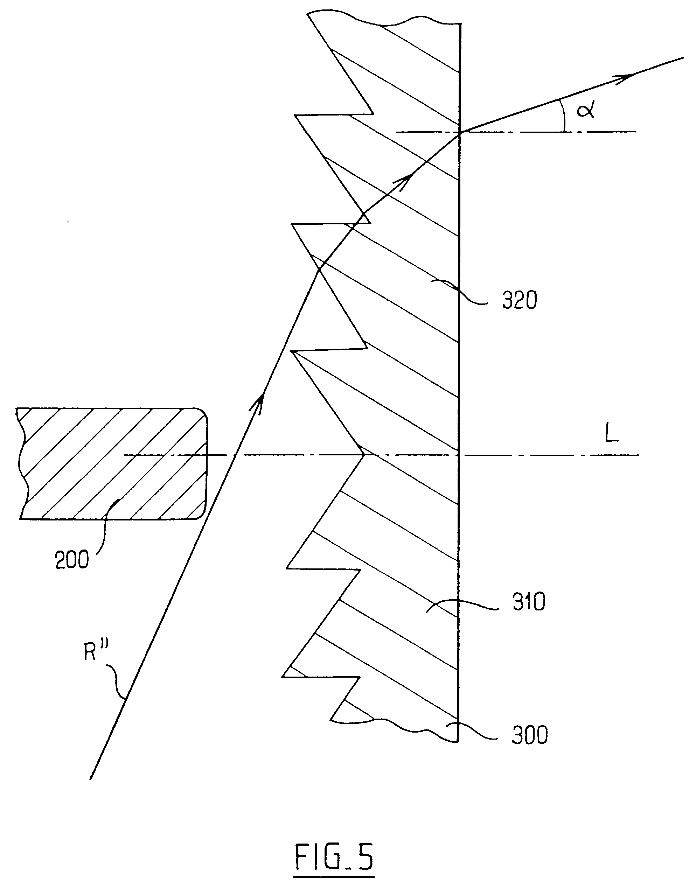

D'autres caractéristiques, buts et avantages de la présente invention apparaîtront mieux à la lecture de la description donnée à titre d'exemple non limitatif et faite en référence aux dessins annexés sur lesquels :
. la figure 1 représente une vue en coupe transversale d'une partie d'un feu de signalisation selon l'art antérieur ;
. la figure 2 représente une vue d'ensemble en coupe d'un feu de signalisation selon l'invention ;
. la figure 3 représente la trajectoire d'un rayon parasite sur une vue partielle à échelle agrandie du feu de signalisation de la figure 2 ;
. la figure 4 représente une vue de face d'un exemple de voyant d'un feu de signalisation selon l'invention ; et
. la figure 5 représente la trajectoire d'un autre type de rayon parasite dans un feu de signalisation selon l'invention.

En référence à la figure 1, on a représenté le comportement optique d'un voyant 30 de feu de signalisation connu doté d'une optique à prismes 31 destinée à redresser, vers la direction générale d'émission du feu, un flux direct incliné émis par la source du feu. Pour conserver une homogénéité d'aspect du voyant lorsque le feu est éteint, on prolonge en 32 les prismes 31 dans une zone inactive du voyant, située au-delà d'une cloison 21 issue du socle du feu et arrivant jusqu'à proximité de la face intérieure du voyant.

La plage éclairante du feu est censée s'arrêter au niveau de la cloison 21, mais on observe sur la figure 1 que des rayons parasites R pénètrent dans le voyant au niveau des dépouilles entre prismes sont susceptibles de ressortir du voyant, vers l'extérieur, en dehors de sa plage éclairante, ce qui est indésirable, du moins sur le plan du style.

La figure 2 montre un feu de signalisation selon l'invention, comprenant une source lumineuse 100, un voyant 300 et un socle 200 comportant une cloison 210 arrivant jusqu'à proximité du voyant, au niveau de la limite L entre une zone active Z1 (plage éclairante) et une zone inactive Z2 du voyant.

Des prismes, en l'espèce des prismes en pavés 310, sont répartis sur la surface intérieure du voyant. Leur géométrie permet de redresser et répartir le flux lumineux issu directement de la source lumineuse vers les différentes zones de la grille photométrique imposée par les règlements ou le cahier des charges.

En dehors de la zone active, la surface optique du voyant est prolongée par des prismes en pavés 320 situés dans le prolongement des prismes 310 de la zone active, mais dont la surface est inversée.

Plus précisément, la géométrie des prismes inversés en zone inactive est obtenue en conservant les dépouilles des prismes correspondant à une surface active étendue en dehors de la frontière, et en construisant des surfaces inverses entre les dépouilles contiguës.

Comme on va le voir en détail sur la figure 3, l'inclinaison inverse des prismes 320 en zone inactive permet aux rayons parasites pénétrant dans le voyant par les dépouilles 311 des prismes 310 de ne pas ressortir à l'extérieur du voyant en zone inactive.

Ainsi, la figure 3 montre la trajectoire d'un rayon parasite R' qui pénètre par la dépouille 311 d'un prisme 310 du voyant 300 situé sur l'extérieur de la zone active, avec un angle d'incidence aigu par rapport au plan du voyant, du fait du décalage latéral important de la source. En raison de cette incidence aiguë, le rayon est réfléchi sur la surface extérieure du voyant 300, à l'intérieur du voyant, puis rencontre la dépouille 321 d'un prisme 320, puis enfin est transmis à l'arrière du voyant car il attaque cette dépouille relativement frontalement.

De la sorte, lorsque le feu est allumé, la plage éclairante présente un contour net car la quantité de lumière issue de la zone inactive du voyant est extrêmement réduite.

De plus, on remarquera que, selon une autre caractéristique avantageuse, l'invention proposée n'introduit pas d'importante discontinuité visuelle dans l'apparence du voyant lorsque le feu est éteint, car des prismes visuellement similaires forment la surface arrière du voyant en zones active et inactive.

Le dispositif de l'invention présente aussi l'avantage de laisser au styliste la liberté de la définition de la forme de la plage éclairante dans un voyant de plus grandes dimensions. Ainsi, la figure 4 montre le voyant 300 d'un feu de signalisation, sur lequel apparaît une plage éclairante PE, dont la forme est indépendante de celle des contours physiques du voyant.

Selon une autre caractéristique avantageuse, la distinction effective entre les zones active et inactive du voyant, ne nécessite pas de traitement ou d'ajout particulier de matière ou de peinture sur le voyant.

En effet, l'ensemble du voyant peut être obtenu par simple moulage sans traitement spécifique pour la zone inactive.

Enfin, la figure 5 montre en détail, au niveau de la limite L entre les zones active et inactive du voyant, une variante de réalisation dans laquelle la cloison 210 issue du socle 200 est arrêtée un peu en retrait de la surface intérieure du voyant 300.

La cloison légèrement en retrait permet certes à certains autres rayons parasites R" issus de la source lumineuse de pénétrer dans la zone inactive.

Mais la figure 5 montre qu'un tel rayon ressort du voyant avec une forte inclinaison horizontale ou verticale (α), et n'apparaît donc pas dans le flux lumineux observé dans l'angle solide de perception normal du feu.

Ainsi, selon une autre caractéristique avantageuse, la présente invention permet dans certains cas d'éloigner l'extrémité libre de la cloison de la surface arrière du voyant, rendant cette cloison moins perceptible lorsque le feu est éteint, et laissant plus de liberté au montage du feu de signalisation suivant les différentes tolérances de fabrication et les différents jeux de montage.

Selon une variante encore, on remarquera que les prismes des zones active et inactive peuvent être en bandes. Les caractéristiques et avantages de l'invention sont maintenus.

Bien entendu, la présente invention n'est nullement limitée aux formes de réalisation décrites et représentées, mais l'homme de l'art saura y apporter toute variante ou modification conforme à son esprit.

## Revendications

1. Feu de signalisation pour véhicule automobile, comprenant une source lumineuse (100) et un voyant (300), le voyant comportant une zone active (Z1) et une zone inactive (Z2), le feu comportant une cloison (210) arrivant jusqu'à proximité de la face interne duoyant au niveau de la transition entre les zones active et inactive, et le voyant comportant dans ladite zone active une optique à prismes (310) apte à réduire la divergence du rayonnement incident, ladite optique à prismes comportant une série de dépouilles exposées à une proportion substantielle d'un rayonnement issu de la source et dirigé en oblique, dépouilles par lesquelles ledit rayonnement peut pénétrer dans le voyant et se propager jusque dans ladite zone inactive, caractérisé en ce que le voyant comporte, au niveau de ladite zone inactive, des prismes (320) possédant des surfaces essentiellement inverses de celles des prismes voisins de la zone active.

2. Feu de signalisation selon la revendication 1, caractérisé en ce que les prismes des zones active et inactive sont constitués par des pavés prismatiques.

3. Feu de signalisation selon la revendication 1, caractérisé en ce que les prismes des zones active et inactive sont constitués par des bandes prismatiques.

4. Feu de signalisation selon l'une des revendications 1 à 3, caractérisé en ce que la cloison (210) est en retrait de la surface intérieure du voyant.

5. Feu de signalisation selon l'une des revendications 1 à 4, comportant un voyant de contour physique donné, caractérisé en ce qu'il possède une zone active de contour indépendant dudit contour physique.
